# EUROPEAN PATENT SPECIFICATION

(11) **EP 1 550 796 B1**
(45) Date of publication and mention of the grant of the patent: **17.11.2010**
(21) Application number: 04106988.1
(22) Date of filing: 27.12.2004
(51) Int. Cl.: F01N 3/20, F01N 3/22

(54) **Method for controlling the temperature of the exhaust gases in an engine and the relative engine apparatus**
Verfahren und Vorrichtung zur Kontrolle der Abgastemperatur eines Motors
Méthode et dispositif pour contrôler la température des gaz d'échappement d'un moteur

(30) Priority: 29.12.2003 IT MI20032606
(43) Date of publication of application: 06.07.2005
(60) Divisional application: 10151073.3
(73) Proprietor: IVECO S.p.A., 10156 Torino (IT)
(72) Inventor: Ellensohn, Rudolf, 9434 AU (SG) (CH); Fessler, Harald, 9320 Arbon (CH); Dellora, Giancarlo, 10129, Torino (IT)
(74) Representative: Gervasi, Gemma

(56) References cited:
- EP-A- 0 994 245
- DE-A- 19 833 619
- US-B1- 6 276 139
- US-B2- 6 470 864
- US-B2- 6 637 204
- PATENT ABSTRACTS OF JAPAN vol. 2003, no. 12, 5 December 2003 (2003-12-05) & JP 2003 343245 A (TOYOTA MOTOR CORP), 3 December 2003 (2003-12-03)
- PATENT ABSTRACTS OF JAPAN vol. 018, no. 338 (M-1628), 27 June 1994 (1994-06-27) & JP 06 081631 A (ISUZU MOTORS LTD), 22 March 1994 (1994-03-22)

## Description

### FIELD OF THE INVENTION

The present invention relates to an engine apparatus for controlling the temperature of the exhaust gases in an internal combustion engine, in particular in a diesel engine for industrial vehicles.

### PRIOR ART

A much felt problem that is commonly associated with internal combustion engines, in particular with diesel engines, whether turbocharged or not, regards the formation of nitrogen oxides during combustion. The nitrogen oxides are discharged with the engine exhaust gases and represent one of the main pollutants. Although several solutions have been developed to reduce the formation of these compounds, nitrogen oxide levels in exhaust emissions continue to be too high and, also in view of the need to comply with stricter emissions standards, systems must be used that are capable of abating nitrogen oxides in exhaust gases. The majority of these systems are based on the use of catalysts that trap or decompose the nitrogen oxides.

One such system is the SCR (Selective Catalytic Reduction) system; this system is based on the reaction, promoted by an appropriate catalytic system, between the nitrogen oxides in the exhaust gases and ammonia that is fed as a reducing agent. Different methods are used to feed the ammonia; for example it may be generated from the hydrolysis of urea supplied specifically for that purpose, by means of the appropriate dosing systems.

Another system is using catalytic systems, for example platinum catalysts, that are capable of trapping or absorbing the nitrogen oxides. The system is regenerated by injecting adequate amounts of vaporized fuel at regular cycles, so that during the combustion process the nitrogen oxides are transformed into nitrogen.

One problem in connection with this type of system is that it can only operate within a specific temperature range. Moreover, the catalyst can suffer irreversible damage if the temperature is too high (more than 500 - 550°C).

Although such systems are suitable for use in fixed power generation plants, where the operating conditions can easily be kept under control, the fact that they are temperature-sensitive hinders their use in vehicle engines, where operating conditions can vary greatly and extremely quickly; such changes mean that there are also significant changes in the temperature of the exhaust gases, which are often too hot.

US 6 637 204 describes an internal combustion engine wherein air from the intake line, compressed by a compressor is withdrawn and fed to the exhaust line upstream of a catalytic converter in order to provide secondary air to increase temperature in the converter during cold starts.

EP 0994245 discloses an internal combustion engine wherein a portion of the air from a supply line is introduced, by means of a bypass line, inside the head of the engine so as to reduce the heat amount of the exhaust gases. -Therefore the need is still felt, of ensuring that the engine exhaust gases never exceed a given temperature, and of maintaining said exhaust gases at temperatures close to those at which maximum efficiency of the catalytic systems can be assured.

### SUMMARY OF THE INVENTION

The problems described above have now been solved with an engine apparatus according to claim 1.

Between said compressor and the engine there is an intake air cooling system, and said portion of air is picked up downstream of said cooling system.

The gas exhaust line incorporates a turbine that drives said compressor. According to one aspect of the invention, the exhaust line incorporates an exhaust gas treatment unit, preferably a system for the abatement of nitrogen oxides, and the point at which the air is introduced is upstream of such unit. The device may, for example, consist of an SCR system or an absorption (NOₓ trap) system as described above, or another type of catalytic system.

This invention refers in particular to that set forth in the claims, which are attached hereto.

### LIST OF DRAWINGS

This invention will now be illustrated through a detailed description of the preferred but not exclusive embodiments, furnished merely by way of example, with the aid of the drawings attached, of which:
figure 1 is the layout of a engine apparatus illustrating an example not covered by the present invention;
figure 2 is the layout of a engine apparatus illustrating another example not covered by the present invention.

### DETAILED DESCRIPTION OF A PREFERRED EMBODIMENT

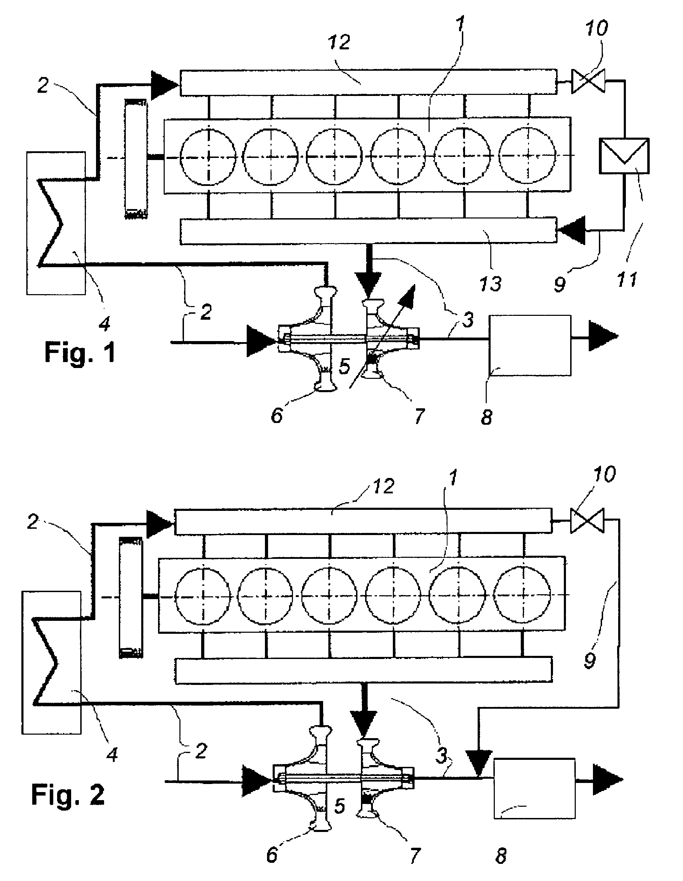

Referring to figures 1 and 2, the layout of a engine apparatus according to two examples not covered by the invention is shown. The engine apparatus comprises an engine 1, which may be a diesel engine, an air supply line 2 to said engine, and an exhaust line 3 for scavenging the exhaust gases generated by said engine. The engine apparatus preferably comprises a turbocharger unit 5, comprising a turbocharger 6 set on the supply line 2 and a turbine 7 on said exhaust line 3, suitable for driving the turbocharger. Preferably an intake air cooling system 4 is provided at the turbocharger outlet and before the engine inlet, as in conventional turbocharged engines.

The exhaust line 3 comprises, preferably downstream of the turbine, an exhaust gas treatment device, that may be a catalytic system for the abatement of nitrogen oxides.

By means of a bypass line 9, a portion of the intake air is picked up from the supply line 2 and fed directly into the exhaust line 3, without said portion flowing through the engine. Said air is preferably picked up at a point that is downstream of the cooling system 4; a purpose of the method according to the present invention is, in fact, to control the temperature of the exhaust gases that are supplied to the device, in order to prevent these from becoming too hot. For example the pick-up point may be in the intake manifold 12.

Suitable means, such as an air flow control valve 10 are provided to control the flow rate of the air that is picked up as a function of the temperature of the exhaust gases.

With specific reference to figure 1, the point at which the air is reintroduced may be upstream of the turbine 7, for example in the exhaust gas manifold 13. This solution may advantageously be used when the air intake pressure is higher than the exhaust pressure. In that case, it may suffice to use the valve 10 to control the flow rate satisfactorily. If the difference in pressure is sufficient, but not continuous (possibility of exhaust pressure waves, variable operating conditions) optionally a conventional check valve 11 (for example a reed valve) can be provided to prevent the air back flow along the bypass line 9. As in conventional turbocharged engines, the turbine 7 may advantageously be a variable geometry turbine. This is particularly advantageous if the engine apparatus layout is like the one illustrated in figure 1 because the geometry of the turbine can be adjusted to vary the pressure upstream of it. This operation may constitute a valid method for controlling the difference in the pressure applied upstream and downstream of the bypass line 9, in order to guarantee the appropriate air flow rates, along such line, consistently with the need to control the temperature under different operating conditions.

The layout in figure 1 is particularly advantageous because the pressure of the air that is bypassed along the line 9 is used by the turbine 7, thus avoiding any significant repercussions on engine performance due to the bypass.

If deemed appropriate, the system may also incorporate circulation means, such as compressors on the line 9 in order to guarantee the air flow rate.

According to the example, shown schematically in figure 2, the point at which the air is fed into the exhaust line 3 may be downstream of the turbine, between the turbine and the treatment device 8. This solution is advantageous in engines in which the exhaust pressure is higher than the intake pressure, or in which the difference between the exhaust and intake pressures is not sufficient to guarantee an adequate air flow rate in the bypass line 9. According to this layout, it usually suffices to use the valve 10 to control the flow rate satisfactorily under all operating conditions.

It is also possible, if deemed appropriate, to alternate the two methods of operation illustrated in figures 1 and 2 in a single engine apparatus, according to the operating conditions. According to the invention, two bypass lines are provided, each equipped with a valve, each with a control valve and/or a valve to enable switching between the two branches.

In case of a multi-stage turbocharged engine, in which the exhaust gas line incorporates at least two turbines in series, the point at which the air is introduced after being picked up from the intake line may also be in an intermediate position between the two turbines; this ensures an adequate difference in pressure at the ends of the bypass line, in order to guarantee an adequate air flow rate under all operating conditions, while recovering part of the energy from the pressure of the air that is picked up, in the low pressure turbine/turbines.

The present invention provides an efficient method for controlling the temperature of the exhaust gases, when necessary, such as in the case of temperature-sensitive catalytic purification systems. Thanks to the present invention not only is it possible to prevent the exhaust gases from reaching excessively high temperatures that may undermine the correct operation of the catalyst, but these temperatures can also be maintained within ranges at which maximum catalyst efficiency is assured. For example, the ideal temperature for SCR systems and those based on the use of nitrogen oxide traps is between 350 and 450°C, while temperatures of more than 500 - 550 °C may irreversibly damage the catalyst.

## Claims

1. Engine apparatus comprising:
an internal combustion engine (1)
an air supply line (2) to said engine comprising at least one turbocharger compressor (6) and an intake air cooling system (4) provided at the turbocharger outlet and before the engine inlet; ;
a gas exhaust line (3) from said engine, including an exhaust gas manifold (13);
a turbine (7) on said gas exhaust line (3) for driving said turbocharger compressor (6);
a first and a second bypass lines that connect such air supply line (2) at a point between said compressor (6) and said engine and downstream of said air cooling system (4), with said gas exhaust line, in order to transfer said air from said supply line to said exhaust line (3),
the two bypass lines being each equipped with a control valve for controlling the gas flow rate,
the portion of air in the first bypass line being introduced upstream of said turbine (7) and the portion of air in the second bypass line being introduced downstream of said turbine (7).

2. Engine apparatus according to claim 1, wherein said exhaust line comprises an exhaust gas treatment device (8), and that the air is introduced into the exhaust line upstream of such device.

3. Engine apparatus according to claim 2, wherein said exhaust gas treatment device is a catalytic device for the abatement of nitrogen oxides.

4. Engine apparatus according to claim 1, wherein said turbine is a variable geometry turbine, and the pressure upstream of said turbine is controlled by means for adjusting the variable geometry of said turbine.

5. Engine apparatus according to any of the preceding claims, wherein said engine is a diesel engine.

## Patentansprüche

1. Motor-Apparat, umfassend
einen Verbrennungsmotor (1);
eine Luft-Zufuhrleitung (2) zu dem Motor, umfassend wenigstens einen Turbolader-Kompressor (6) und ein Aufnahmeluft-Kühlsystem (4), das an dem Turbolader-Auslass und vor dem Motor-Einlass vorgesehen ist;
eine Abgas-Leitung (3) von dem Motor, einschließlich eines Abgas-Verteilers (13);
eine Turbine (7) an der Abgas-Leitung (3) zum Antreiben des Turbolader-Kompressors (6);
eine erste und eine zweite Bypass-Leitung, die die Luft-Zufuhrleitung (2) an einem Punkt zwischen dem Kompressor (6) und dem Motor und stromabwärts des Luft-Kühlsystems (4) mit der Abgas-Leitung verbinden, um die Luft von der Zufuhr-Leitung zu der Abgas-Leitung (3) zu überführen;
wobei die beiden Bypass-Leitungen mit einem Steuerungsventil zum Steuern der Gasströmungs-Rate ausgestattet sind;
wobei die Luftmenge in der ersten Bypass-Leitung stromaufwärts der Turbine (7) eingeleitet wird und die Luftmenge der zweiten Bypass-Leitung stromabwärts der Turbine (7) eingeleitet wird.

2. Motor-Apparat nach Anspruch 1, worin die Abgas-Leitung eine Abgas-Behandlungsvorrichtung (8) umfasst, und dass die Luft in die Abgas-Leitung stromaufwärts dieser Vorrichtung eingeleitet wird.

3. Motor-Apparat nach Anspruch 2, worin die Abgas-Behandlungsvorrichtung eine katalytische Vorrichtung für die Senkung des Gehalts an Stickstoffoxiden ist.

4. Motor-Apparat nach Anspruch 1, worin die Turbine eine Turbine mit variabler Geometrie ist und der Druck stromaufwärts der Turbine durch Mittel zum Anpassen der variablen Geometrie der Turbine gesteuert wird.

5. Motor-Apparat nach irgendeinem der vorangehenden Ansprüche, worin der Motor ein Dieselmotor ist.

## Revendications

1. Moteur comprenant :
un moteur à combustion interne (1) ;
une conduite d'alimentation d'air (2) jusqu'audit moteur comprenant au moins un compresseur de turbocompresseur (6) et un système de refroidissement d'air d'admission (4) prévu au niveau de la sortie du turbocompresseur et avant l'entrée du moteur ;
une conduite d'échappement de gaz (3) à partir dudit moteur, comprenant un collecteur de gaz d'échappement (13) ;
une turbine (7) sur ladite conduite d'échappement de gaz (3) pour entraîner ledit compresseur de turbocompresseur (6) ;
une première et une deuxième conduite de dérivation qui raccordent une telle conduite d'alimentation d'air (2) au niveau d'un point situé entre ledit compresseur (6) et ledit moteur et en aval dudit système de refroidissement d'air (4), avec ladite conduite d'échappement de gaz, afin de transférer ledit air de ladite conduite d'alimentation à ladite conduite d'échappement (3),
les deux conduites de dérivation étant chacune équipées d'une soupape de commande pour contrôler le débit de gaz,
la partie d'air dans la première conduite de dérivation étant introduite en amont de ladite turbine (7) et la partie d'air dans la deuxième conduite de dérivation étant introduite en aval de ladite turbine (7).

2. Moteur selon la revendication 1, dans lequel ladite conduite d'échappement comprend un dispositif de traitement de gaz d'échappement (8) et en ce que l'air est introduit dans la conduite d'échappement en amont d'un tel dispositif.

3. Moteur selon la revendication 2, dans lequel ledit dispositif de traitement de gaz d'échappement est un dispositif catalytique pour la réduction des oxydes d'azote.

4. Moteur selon la revendication 1, dans lequel ladite turbine est une turbine à géométrie variable, et la pression en amont de ladite turbine est contrôlée par des moyens pour ajuster la géométrie variable de ladite turbine.

5. Moteur selon l'une quelconque des revendications précédentes, dans lequel ledit moteur est un moteur diesel.
